# EUROPÄISCHE PATENTSCHRIFT

(11) **EP 3 152 997 B1**
(45) Veröffentlichungstag und Bekanntmachung des Hinweises auf die Patenterteilung: **22.08.2018**
(21) Anmeldenummer: 16401064.7
(22) Anmeldetag: 12.09.2016
(51) Int. Cl.: A01C 17/00

(54) **SENSORANORDNUNG UND VERFAHREN ZUM BETREIBEN EINER SENSORANORDNUNG EINER VERTEILMASCHINE**
SENSOR ASSEMBLY AND METHOD FOR OPERATING A SENSOR ASSEMBLY FOR A DISTRIBUTING MACHINE
DISPOSITIF DE CAPTEUR ET PROCÉDÉ DE FONCTIONNEMENT D'UN DISPOSITIF DE CAPTEUR D'UN ÉPANDEUR

(30) Priorität: 06.10.2015 DE 102015116950
(43) Veröffentlichungstag der Anmeldung: 12.04.2017
(73) Patentinhaber: Amazonen-Werke H. Dreyer GmbH & Co. KG, 49205 Hasbergen (DE)
(72) Erfinder: Rahe, Florian, 49504 Lotte (DE); Mindrup, Tobias, 49080 Osnabrück (DE); Ströbel-Fröschle, Markus, 49124 Georgsmarienhütte (DE); Probst, Sergej, 59379 Selm (DE); Numonov, Alisher, 49080 Osnabrück (DE)

(56) Entgegenhaltungen:
- EP-A1- 2 883 436
- EP-A2- 2 465 348
- EP-A2- 2 783 560
- DE-A1-102006 021 378

## Beschreibung

Die Erfindung betrifft eine Sensoranordnung und ein Verfahren zum Betreiben einer Sensoranordnung einer Verteilmaschine gemäß dem Oberbegriff des Patentanspruches 1.

Verteilmaschinen, ausgebildet als Zentrifugalstreuer, welche typischerweise landwirtschaftliches Gut von zumindest vorzugsweise zwei Schleuderscheiben mittels auf den Schleuderscheiben angeordneten, typischerweise jeweils zwei, Wurfschaufeln verteilen sind seit geraumer Zeit Stand der Technik. Das Streugut wird mittels der auf der rotierenden Schleuderscheibe angeordneten Wurfschaufeln durch die auftretenden Zentrifugalkräfte in radialer Richtung beschleunigt und auf diese Weise verteilt. Die Wurfweite und Geometrie des Streufächers, also des Bereichs in dem das Streugut verteilt wird, hängt hierbei von verschiedensten Faktoren ab:
- Die Geometrie der Schleuderscheibe beeinflusst unter anderem den vertikalen Abwurfwinkel.
- Die Anordnung der Wurfschaufel auf der Schleuderscheibe sowie Länge und Geometrie der Wurfschaufel beeinflusst die Abwurfgeschwindigkeit und Flugrichtung des Streugutes.
- Die Beschaffenheit des Streugutes (Korngröße, Korngeometrie und Dichte) beeinflusst die Abwurfgeschwindigkeit und die Fluggeschwindigkeit und damit die Wurfweite.
- Der Auftreffpunkt des Streugutes auf der Schleuderscheibe beeinflusst die Abwurfgeschwindigkeit sowie den horizontalen Abwurfwinkel
- Die Schleuderscheibendrehzahl hat ebenso Auswirkungen auf die Abwurfgeschwindigkeit

Die zunehmende Präzisierung in der Landtechnik, welche eine Vermeidung von Umweltbelastungen und unnötigen Kosten sowie Schonung von Ressourcen zum Ziel hat, verlangt nach immer detaillierteren Einstellmöglichkeiten der landtechnischen Maschinen. Für die Schleuderstreuer gilt entsprechend, dass nicht nur die Menge des aufgebrachten Streugutes, sowie die Schleuderscheibendrehzahl einstellbar sind. Vielmehr kann inzwischen auch der Auftreffpunkt des Streugutes auf die Schleuderscheibe sowie die Schleuderschaufelgeometrie angepasst werden. Auch spezielle Vorrichtungen zur Verteilung des Streugutes in Randbereichen einer landwirtschaftlichen Fläche sind bekannt.
Das Einstellen der verschiedenen Parameter erfolgt mit Hilfe von Tabellen, Formeln und/oder Graphen in denen in Abhängigkeit des Streuparameters, beispielsweise der Schleuderscheibendrehzahl für eine bestimmte Schleuderscheibe, Wurfschaufel und Aufgabepunkt, der mittlere horizontale Abwurfwinkel, also der Abwurfwinkel relativ zu einer Linie, welche vom Zentrum der Schleuderscheibe aus entgegen der Fahrtrichtung in radialer Richtung gezogen wird, und die mittlere Wurfweite angegeben ist. Genauso können Tabellen, Formeln und/oder Graphen vorliegen, für deren Erstellung andere Größen variiert, konstant gehalten und gemessen wurden (DE 36 17 377 C2, DE 33 10 424 C2). Ebenso ist es Stand der Technik den Abwurfwinkel mittels Sensoren zu bestimmen und entsprechend obiger Tabellen, Formeln und/oder Graphen bei Abweichung zu einem vorgegebenen Sollwert Anpassungen an den genannten Parametern vorzunehmen (DE 38 87 218 T2, DE 197 23 359 A1). Hierbei ist insbesondere vorgesehen die Massenverteilung des Streugutes während des Verteilprozesses zu detektieren. Um hierbei ein zufriedenstellendes Ergebnis zu erzielen, ist es beispielsweise erforderlich entweder einen Sensor in kleinen Schritten über die Breite des Streubereiches zu bewegen, um die Querverteilung des Streugutes zu bestimmen, was einen großen Zeitaufwand bedeutet. Alternativ können viele Sensoren so angeordnet werden, dass eine Erfassung des gesamten Streubereiches sichergestellt wird. Letzteres wird beispielsweise in der in der EP 2 883 436 A1 und der DE 10 2013 103 060 A1 beschrieben. Die Messsignale der Sensoren werden typischerweise über eine Datenleitung zu einer Steuervorrichtung an der Verteilmaschine oder dem zugehörigen Traktor übertragen. Die Anordnung mehrerer Sensoren erfolgt zweckmäßigerweise auf einem Kreisbogen, welcher zumindest annähernd konzentrisch zum Mittelpunkt der jeweiligen Streuscheibe orientiert ist.

Eine Anordnung verschiedener elektronischer Bauteile zur Steuerung eines landwirtschaftlichen Gerätes wird beispielsweise in US 5,260,875 A offenbart.

Bei dem oben genannten Stand der Technik wird jedoch mit unterschiedlichen elektronischen Bauteilen gearbeitet, welche zu individuell unterschiedlichen Zwecken in dem elektronischen System dienen. Bei einem Sensorsystem zumindest überwiegend gleicher Sensoren stellt sich die Frage nach einem möglichst effizienten Aufbau des Systems unter Berücksichtigung der bereitzustellenden Funktionalitäten.

Aufgabe der vorliegenden Erfindung ist es dementsprechend eine möglichst einfache Anordnung aus zumindest zwei gleichen Sensoren zur Ermittlung der Abwurfwinkelverteilung bei einer Verteilmaschine bereitzustellen, welche die Funktionalitäten der Anordnung möglichst effizient zur Verfügung stellt.

Dieses wird durch eine Sensoranordnung mit zumindest zwei baugleichen Sensoren gemäß des Oberbegriffs des Patentanspruchs 1 erreicht, wobei in Abhängigkeit der Position innerhalb der Sensoranordnung durch die lokal auf der Recheneinheit installierte Software zumindest einem Sensor und/oder der ihm zugeordneten Recheneinheit zumindest eine zusätzliche Funktionalität zugewiesen wird. Auf diese Weise ist es bei einer Sensoranordnung aus zumindest mehreren baugleichen Sensoren möglich, dass Funktionalitäten, welche durch einen einzigen Sensor ausgeführt werden können oder müssen, durch die Sensoren autark vergeben werden. Alle Sensoren können über eine identische Software verfügen und die Aufgaben- und Funktionenverteilung innerhalb der Sensoranordnung erfolgt allein anhand der Anordnung der Sensoren an der Datenleitung der Sensoranordnung.

In einer vorteilhaften Weiterbildung der Erfindung ist die jeweilige Position der Sensoren durch diese autark bestimmbar. Das bedeutet, dass die Sensoren selbst ihre Position innerhalb der Sensoranordnung bestimmen und auf diese Weise die jeweilige Funktionalität ohne äußeren Eingriff vergeben.

In einer vorteilhaften Ausgestaltung der Erfindung sind alle Sensoren der Sensoranordnung an einem Bussystem angeordnet. Auf diese Weise können die Daten der Sensoranordnungen vorteilhaft mittels eines einzigen Übertragungsweges übertragen werden.

In einer vorteilhaften Weiterbildung der Erfindung sind alle Sensoren der Sensoranordnung an einem Bussystem nach dem Daisy-Chain Verfahren angeordnet. Das bedeutet, dass die Sensoren, welche zur Bestimmung der Abwurfverteilung an einem einzigen Übertragungsmedium, bspw. einem Kabel angeordnet sein können, in Reihe verbunden sind. Dies ist hinsichtlich des typischerweise vorliegenden linearen Aufbaus der Sensoranordnung auf einem Kreisbogen um die Schleuderscheibe der Verteilmaschine von Vorteil. Es genügt somit ein einziges Kabel entlang des Kreisbogens zu führen und zu den jeweiligen Sensoren zu verzweigen.

In einer vorteilhaften Ausgestaltung der Erfindung übernimmt genau ein Sensor der Sensoranordnung und/oder die ihm zugeordnete Recheneinheit zusätzliche Masteraufgaben, wie vorzugsweise das Zusammenführen von Messwerten und/oder das Anpassen von Einstellparametern von zumindest zwei Sensoren. Da es vorteilhaft ist, die Messwerte der Sensoren direkt an der Sensoranordnung zusammenzuführen und/oder zu verarbeiten, stellt sich die Frage, wie eine Zuteilung solcher Aufgaben realisiert werden soll. Hier ist es vorteilhaft, wenn diese Zuordnung automatisiert und in erfindungsgemäßer Weise allein an Hand der Position des jeweiligen Sensors innerhalb der Sensoranordnung geschieht. Es kann somit ein System aus mehreren baugleichen Sensoren aufgebaut werden, ohne dass ein ausgezeichneter Mastersensor oder eine zusätzliche Elektronik an dem System angeordnet sein muss. Dies bedeutet, dass beispielsweise in einem System aus einem Master- und mehreren Slavesensoren, wobei dem Mastersensor zusätzliche Funktionalitäten zugewiesen werden im Vergleich zu den Slavesensoren, die Aufgabe des Mastersensors von einem Sensor auf einen anderen Sensor übergeht, wenn die Position der beiden Sensoren innerhalb der Sensoranordnung getauscht wird. Es kann ebenfalls vorgesehen sein, die Funktion der Sensoren zu überwachen und ggf. Änderungen von Einstellparametern vorzunehmen. Auch dies könnte durch einen Mastersensor bewerkstelligt werden. Dieser könnte beispielsweise überwachen, ob die Signale der einzelnen Sensoren sich gegenseitig beeinflussen und ggf. eine Änderung der Ansteuerung der Sensoren veranlassen.

Es wird zur Lösung der gestellten Aufgabe ebenfalls ein Verfahren zum Betreiben von Sensoren gemäß dem Oberbegriff des Anspruchs 6 vorgeschlagen, wobei in Abhängigkeit der Position innerhalb der Sensoranordnung zumindest einem Sensor und/oder der ihm zugeordneten Recheneinheit zumindest eine zusätzliche Funktionalität zugewiesen wird. Somit kann auf möglichst einfache Weise eine Zuordnung verschiedener Funktionalitäten an baugleiche Sensoren erreicht werden.

Weitere Einzelheiten der Erfindung sind den weiteren Unteransprüchen, der Beispielsbeschreibung und den Zeichnungen zu entnehmen. Hierbei zeigen
- Fig. 1: eine schematische Darstellung eines Sensorsystems, welches an einer Schleuderscheibe einer Verteilmaschine angeordnet ist und
- Fig. 2: schematische Darstellung der Signalverarbeitung eines Mastersensors.

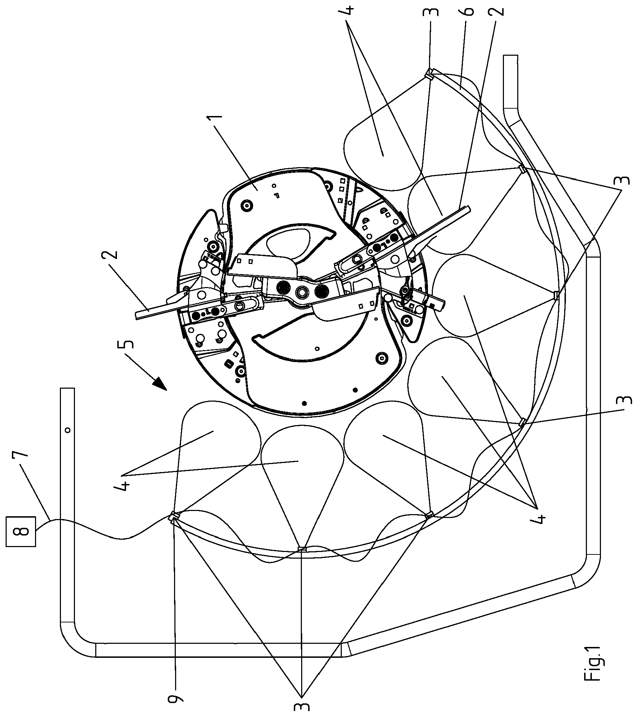

Landwirtschaftliche Verteilmaschinen nutzen zum Ausbringen von körnigem Gut typischerweise zwei Schleuderscheiben 1, wie in Fig. 1 dargestellt, die sich in entgegengesetzter Richtung drehen und das Streugut mittels Wurfschaufeln 2 beschleunigen, so dass es tangential von der Schleuderscheibe weggeschleudert wird.

Zur Charakterisierung des Streubildes ist um die Schleuderscheibe im Abwurfbereich ein Sensorsystem 5 angeordnet. Dieses besteht aus einer Mehrzahl von Sensoren 3 mit einem Messbereich 4, welche das Streuverhalten der Schleuderscheibe 1 überwachen. Die Sensoren können wie in diesem Ausführungsbeispiel als Radarsensoren oder aber als Ultraschallsensoren oder sonstige elektromagnetische oder akustische Sensoren ausgebildet sein.

Die Sensoren sind an einem die Schleuderscheibe teilweise umgebenden Rohr 6 angebracht. Die Sensoren können auch auf sonstige Weise in der Nähe der Schleuderscheibe befestigt sein, beispielsweise an einem darüber liegenden Streuguttank der Verteilmaschine.

Zweckmäßiger Weise sind die Sensoren in linearer Weise und derart angeordnet, dass der Streufächer der Verteilmaschine möglichst lückenlos und ohne zu große Überlappungen der Messbereiche 4 der Sensoren 3 der abgetastet wird. Hierbei ist zu beachten, dass die Sensoren typischerweise nur in dem Umfangsbereich des Schleuderstreuers angebracht sind, in dem auch eine Verteilung von Streugut erfolgt. Dieser Abwurfbereich ist durch Anpassung des Auftreffpunktes des Düngers auf die Schleuderscheibe 1 und der Drehzahl der Schleuderscheibe änderbar und darüber hinaus beispielsweise von den Materialeigenschaften des auszubringenden Guts abhängig.

Die Sensoren sind in diesem Ausführungsbeispiel mittels einer einzigen Datenleitung 7, einem sogenannten Bussystem, in Daisy-Chain-Anordnung verbunden. Das bedeutet, dass die Sensoren in einer elektrischen Reihenschaltung angeordnet sind.

Mittels der jeweiligen Position der Sensoren innerhalb der Sensoranordnung 5 erfolgt nun eine Klassifizierung der einzelnen Sensoren als Master- bzw. Slavesensor, wobei dem Mastersensor zusätzliche Funktionalitäten, wie beispielsweise Überwachungs-, Konfigurations- und/oder Analysefunktionen zugewiesen werden. Da sich die Sensoren 8 bezüglich ihrer Hard- und Software nicht unterscheiden, erfolgt die Zuordnung auf Basis der Position der Sensoren innerhalb der Sensoranordnung.

In Fig. 1 ist beispielsweise ein Sensor 9 der identischen Sensoren 3 innerhalb der Sensoranordnung 5 als Mastersensor ausgezeichnet. Es kann auch jede andere Position innerhalb der Sensoranordnung als Mastersensor ausgezeichnet werden. Ebenso führt ein Tausch der Position eines anderen Sensors mit dem Mastersensor zu einem Tausch der jeweiligen Zuordnung. Der bisherige Mastersensor wird dann also als Slavesensor innerhalb des Sensorsystems fungieren und umgekehrt.

Die Datenleitung ist mit einem Steuersystem 8 kabelgebunden oder auch kabellos zur weiteren Verarbeitung der Sensordaten verbunden. So wird auf Basis der Sensordaten beispielsweise eine Anpassung der Schleuderscheibendrehzahl und der Ausbringmenge durchgeführt.

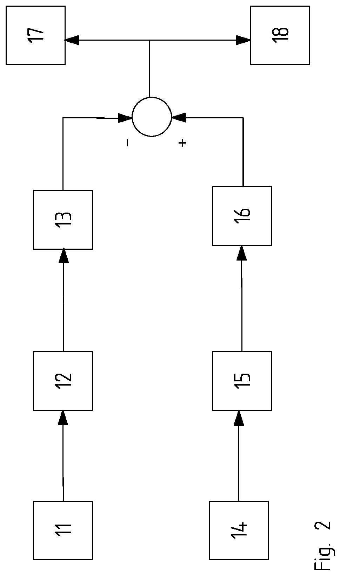

Eine Aufbereitung der Sensordaten kann nun durch den Mastersensor 9 durchgeführt werden. Gemäß Fig. 2 werden Radarsignale eines oder mehrerer der Sensoren 3, welche bei gestopptem Verteilvorgang in Schritt 11 aufgenommen wurden als Referenzsignal verwendet. Zu diesem Zweck wird das Signal, welches bei der Referenzmessung gewonnen wurde aufbereitet. Es kann beispielsweise in einem Schritt 12 gefiltert und einem Schritt 13 analysiert und/oder zur späteren Verwendung beispielsweise in dem Mastersensor oder einer Steuervorrichtung gespeichert werden.

In einem Schritt 14 wird nun das aktuelle Messsignal eines oder mehrerer der Sensoren 3 an den Mastersensor übermittelt und kann ebenfalls zur weiteren Verwendung in einem Schritt 15 gefiltert und in einem Schritt 16 analysiert und/oder gespeichert werden.

Das aufbereitete Referenzsignal wird nun von dem bearbeiteten Messsignal subtrahiert, um das hinsichtlich des Untergrundsignals bereinigte Messsignal zu generieren. Anschließend wird dieses Signal zur weiteren Analyse an die Steuervorrichtung 8 in einem Schritt 17 übersendet, welche auf Basis der übermittelten Daten eine Überprüfung der Einstellparameter der Verteilmaschine und/oder eine Anpassung der Regelparameter des Sensorsystems 5 vornimmt.

In einem Schritt 18 können die ermittelten Messwerte zusätzlich oder alternativ durch den Mastersensor 9 verwendet werden, um ggf. eine Anpassung der Regelparameter des Sensorsystems 5 zu veranlassen. Beispielsweise könnte durch Analyse der gemessenen Daten durch den Mastersensor detektiert werden, wenn einer oder mehrere Sensoren sich in der Sättigung befinden und es könnte dementsprechend eine Anpassung der Leistung des oder der Radarquellen, welche Teil der Sensoren 3 sein können, durch den Mastersensor 9 veranlasst werden.

Weitere Funktionen können Umfang der Funktionalitäten sein, welche dem Mastersensor zugeordnet sind. Hierbei kann es sich beispielsweise um Überwachungs- oder Konfigurationsfunktionalitäten die Slavesensoren betreffend handeln. Beispielsweise kann es nötig sein, auf Grund erfasster Messwerte weitere Einstellparameter der Slavesensoren zu verändern.

## Patentansprüche

1. Sensoranordnung (5) zur Ermittlung der Abwurfverteilung von Streugut bei einer Verteilmaschine mittels zumindest zwei elektromagnetische oder akustische Wellen aussendende, baugleiche Sensoren (3), wobei die Sensoren jeweils über eine lokale Recheneinheit verfügen, wobei auf jeder dieser Recheneinheiten die gleiche Software installiert ist, **dadurch gekennzeichnet, dass** in Abhängigkeit der Position innerhalb der Sensoranordnung (5) durch die lokal auf der Recheneinheit installierte Software zumindest einem Sensor (9) und/oder der ihm zugeordneten Recheneinheit zumindest eine zusätzliche Funktionalität zugewiesen wird.

2. Sensoranordnung nach Anspruch 1, **dadurch gekennzeichnet, dass** die jeweilige Position des Sensors (3) innerhalb der Sensoranordnung (5) durch die Software jedes Sensors autark bestimmbar ist.

3. Sensoranordnung nach Anspruch 1 oder 2, **dadurch gekennzeichnet, dass** die zumindest zwei Sensoren (3) in einem Bussystem angeordnet sind.

4. Sensoranordnung nach Anspruch 3, **dadurch gekennzeichnet, dass** dieses Bussystem nach dem Daisy-Chain Verfahren aufgebaut ist.

5. Sensoranordnung nach zumindest einem der Ansprüche 1 bis 4, **dadurch gekennzeichnet, dass** genau ein Sensor (9) der Sensoranordnung (5) und/oder die ihm zugeordnete Recheneinheit zusätzliche Masteraufgaben, wie vorzugsweise das Zusammenführen von Messwerten und/oder das Anpassen von Einstellparametern von zumindest zwei Sensoren übernimmt.

6. Verfahren zum Betreiben einer Sensoranordnung (5) zur Ermittlung der Abwurfverteilung von Streugut bei einer Verteilmaschine mittels zumindest zwei elektromagnetische oder akustische Wellen aussendende, baugleiche Sensoren (3) **dadurch gekennzeichnet, dass** in Abhängigkeit der Position innerhalb der Sensoranordnung (5) zumindest einem Sensor (9) und/oder der ihm zugeordneten Recheneinheit zumindest eine zusätzliche Funktionalität zugewiesen wird.

7. Verfahren nach Anspruch 6, **dadurch gekennzeichnet, dass** die Position des Sensors (3) innerhalb der Sensoranordnung durch die Software jedes Sensors autark bestimmbar ist.

8. Verfahren nach Anspruch 6 oder 7, **dadurch gekennzeichnet, dass** genau ein Sensor (9) der Sensoranordnung und/oder die ihm zugeordnete Recheneinheit zusätzliche Masteraufgaben, wie vorzugsweise das Zusammenführen von Messwerten und/oder das Anpassen von Einstellparametern von zumindest zwei Sensoren übernimmt.

## Claims

1. Sensor arrangement (5) for determining the discharge distribution of spreadable material in a distribution machine by means of at least two structurally identical sensors (3) which emit electromagnetic or acoustic waves, wherein the sensors each have a local computing unit, wherein the same software is installed on each of these computing units, **characterized in that** at least one additional functionality is allocated to at least one sensor (9) and/or to the computing unit assigned to the latter on the basis of the position inside the sensor arrangement (5) by the software locally installed on the computing unit.

2. Sensor arrangement according to Claim 1, **characterized in that** the respective position of the sensor (3) inside the sensor arrangement (5) can be autonomously determined by the software of each sensor.

3. Sensor arrangement according to Claim 1 or 2, **characterized in that** the at least two sensors (3) are arranged in a bus system.

4. Sensor arrangement according to Claim 3, **characterized in that** this bus system is constructed according to the daisy chain method.

5. Sensor arrangement according to at least one of Claims 1 to 4, **characterized in that** precisely one sensor (9) of the sensor arrangement (5) and/or the computing unit assigned to said sensor undertake(s) additional master tasks, preferably the combining of measured values and/or the adapting of adjustment parameters of at least two sensors.

6. Method for operating a sensor arrangement (5) for determining the discharge distribution of spreadable material in a distribution machine by means of at least two structurally identical sensors (3) which emit electromagnetic or acoustic waves, **characterized in that** at least one additional functionality is allocated to at least one sensor (9) and/or to the computing unit assigned to the latter on the basis of the position inside the sensor arrangement (5).

7. Method according to Claim 6, **characterized in that** the position of the sensor (3) inside the sensor arrangement can be autonomously determined by the software of each sensor.

8. Method according to Claim 6 or 7, **characterized in that** precisely one sensor (9) of the sensor arrangement and/or the computing unit assigned to said sensor undertake(s) additional master tasks, preferably the combining of measured values and/or the adapting of adjustment parameters of at least two sensors.

## Revendications

1. Arrangement de détection (5) destiné à déterminer la distribution d'éjection de matériau d'épandage avec une machine d'épandage au moyen d'au moins deux capteurs (3) de construction identique qui émettent des ondes électromagnétiques ou acoustiques, les capteurs disposant respectivement d'une unité de calcul locale, le même logiciel étant installé sur chacune de ces unités de calcul, **caractérisé en ce qu'**au moins une fonctionnalité supplémentaire est attribuée à au moins un capteur (9) et/ou à l'unité de calcul qui lui est associée par le logiciel installé localement sur l'unité de calcul en fonction de la position à l'intérieur de l'arrangement de détection (5) .

2. Arrangement de détection selon la revendication 1, **caractérisé en ce que** la position respective du capteur (3) à l'intérieur de l'arrangement de détection (5) peut être déterminée de manière autonome par le logiciel de chaque capteur.

3. Arrangement de détection selon la revendication 1 ou 2, **caractérisé en ce que** les au moins deux capteurs (3) sont disposés dans un système de bus.

4. Arrangement de détection selon la revendication 3, **caractérisé en ce que** ce système de bus est construit selon le procédé de la guirlande.

5. Arrangement de détection selon l'une des revendications 1 à 4, **caractérisé en ce qu'**exactement un capteur (9) de l'arrangement de détection (5) et/ou l'unité de calcul qui lui est associée prend en charge des tâches de maître supplémentaires, comme de préférence la convergence de valeurs mesurées et/ou l'adaptation de paramètres de réglage d'au moins deux capteurs.

6. Procédé pour faire fonctionner un arrangement de détection (5) destiné à déterminer la distribution d'éjection de matériau d'épandage avec une machine d'épandage au moyen d'au moins deux capteurs (3) de construction identique qui émettent des ondes électromagnétiques ou acoustiques, **caractérisé en ce qu'**au moins une fonctionnalité supplémentaire est attribuée à au moins un capteur (9) et/ou à l'unité de calcul qui lui est associée en fonction de la position à l'intérieur de l'arrangement de détection (5).

7. Procédé selon la revendication 6, **caractérisé en ce que** la position du capteur (3) à l'intérieur de l'arrangement de détection peut être déterminée de manière autonome par le logiciel de chaque capteur.

8. Procédé selon la revendication 6 ou 7, **caractérisé en ce qu'**exactement un capteur (9) de l'arrangement de détection et/ou l'unité de calcul qui lui est associée prend en charge des tâches de maître supplémentaires, comme de préférence la convergence de valeurs mesurées et/ou l'adaptation de paramètres de réglage d'au moins deux capteurs.
